# EUROPÄISCHE PATENTSCHRIFT

(11) **EP 3 839 275 B1**
(45) Veröffentlichungstag und Bekanntmachung des Hinweises auf die Patenterteilung: **27.03.2024**
(21) Anmeldenummer: 20207012.4
(22) Anmeldetag: 11.11.2020
(51) Int. Cl.: F16B 21/07, F16B 21/02

(54) **HALTEKLAMMER EINES SCHNELLVERSCHLUSSES, EIN SCHNELLVERSCHLUSS SOWIE EINE BAUTEILVERBINDUNG MIT DIESEM SCHNELLVERSCHLUSS**
A QUICK RELEASE FASTENER, RETAINING CLIP OF A QUICK RELEASE FASTENER AND A COMPONENT CONNECTION WITH THIS QUICK RELEASE FASTENER
PINCE DE MAINTIEN D'UNE FERMETURE RAPIDE, FERMETURE RAPIDE AINSI QUE RACCORD DE COMPOSANT DOTÉ D'UNE TELLE FERMETURE RAPIDE

(30) Priorität: 20.12.2019 DE 102019135611
(43) Veröffentlichungstag der Anmeldung: 23.06.2021
(73) Patentinhaber: Böllhoff Verbindungstechnik GmbH, 33649 Bielefeld (DE)
(72) Erfinder: MÜCKE, Michaela, 32760 Detmold (DE); HEINRICHS, Heinrich, 32602 Vlotho (DE); KRATZSCH, Jan Norman, 33790 Halle (DE)
(74) Vertreter: HWP Intellectual Property

(56) Entgegenhaltungen:
- WO-A1-2016/171863
- WO-A1-2017/194226
- DE-U1- 9 101 514
- US-A- 4 925 351
- US-A- 5 011 355
- US-A- 5 774 949
- US-A- 5 873 690

## Beschreibung

### 1. Gebiet der Erfindung

Die vorliegende Erfindung betrifft eine Halteklammer eines Schnellverschlusses, die in einer Bauteilöffnung verrastbar und in der ein Verschlussbolzen verriegelbar ist. Zudem betrifft vorliegende Erfindung einen Schnellverschluss mit dieser Halteklammer in Kombination mit einem Verschlussbolzen. Des Weiteren ist vorliegende Erfindung auf eine Bauteilverbindung zwischen zumindest einem ersten Bauteil und einem zweiten Bauteil gerichtet, in der die Halteklammer in einer nicht rotationssymmetrischen ersten Bauteilöffnung des ersten Bauteils befestigt ist und ein Bolzenschaft des Verschlussbolzens eine zweite Bauteilöffnung im zweiten Bauteil durchläuft.

### 2. Hintergrund der Erfindung

Im Stand der Technik werden seit Jahren zwei oder mehrere Bauteile mithilfe einer Kombination einer Halteklammer und eines darin verankerbaren Verschlussbolzens miteinander verbunden. Grundlage einer derartigen Verbindung besteht darin, dass das erste Bauteil eine an die Halteklammer angepasste Öffnung zur verlässlichen Befestigung der Halteklammer in dieser Bauteilöffnung aufweist. Basierend auf der verlässlichen Befestigung der Halteklammer in einer passenden Bauteilöffnung des ersten Bauteils ist die Verankerung des Verschlussbolzens in der Halteklammer ausreichend, um eine passende Verbindung zu mindestens einem weiteren Bauteil herzustellen. Zu diesem Zweck durchgreift der Schaft des Verschlussbolzens eine entsprechende Bauteilöffnung im zweiten Bauteil und wird dann in der Halteklammer verankert.

Gemäß unterschiedlicher Ausgestaltungsmöglichkeiten der Halteklammer wird eine formschlüssige oder eine reibschlüssige Verbindung zwischen der Halteklammer und dem darin eingreifenden verbindenden Schaft hergestellt. Bezugnehmend auf DE 200 04 580 U1 weist ein U-förmiger Verankerungsbereich nach innen ragende widerhakenähnliche Haltestege auf. Diese Haltestege sind geneigt in Einsteckrichtung des Verbindungsschafts orientiert. Entsprechend blockieren sie widerhakenähnlich den Auszug des Verbindungschafts, da dies zu einer Stauchung der Stege im Verankerungsbereich führt. Zwar realisieren die widerhakenähnlichen Stege des Verankerungsbereichs einen gewissen Halt des Verbindungsschafts im Verankerungsbereich, wirken sich aber gleichzeitig schädigend auf die Oberfläche des Verbindungsschafts aus. Denn die widerhakenähnlichen Stege graben sich in die Oberfläche des Verbindungsschafts ein und führen dadurch zu einer Beschädigung einer dort vorhandenen Korrosionsschutzschicht, wie beispielsweise einer Lackschicht.

Eine alternative Konstruktion einer Halteklammer offenbart WO 03/100267 A1. Die Halteklammer besteht aus V-förmig zueinander angeordneten Federschenkeln, die einen oben offenen und unten geschlossenen Aufnahmespalt für einen Verbindungsschaft bilden. Für eine einfache Herstellung der Halteklammer wird ein durchgehender Blechstreifen verwendet, der in die spätere V-förmige Gestalt gebracht wird. Durch die V-förmige Gestalt der Halteklammer wird ein Aufnahmeraum für einen Verbindungsschaft oder dergleichen gebildet. In diesen Aufnahmeraum ragen widerhakenähnliche Blockierstege hinein. Diese Stege sind in Einsteckrichtung für einen Verbindungsschaft geneigt angeordnet. Das bedeutet, dass sich die Blockierstege in Richtung des geschlossenen Endes der Federklammer neigen. Aufgrund ihrer Federkraft verankern sich die Federstege in der Oberfläche des eingesetzten Verbindungsschafts. Bei dem Versuch, den Verbindungsschaft aus der Halteklammer zu lösen, werden die Federstege gestaucht und entsprechend die Oberfläche des Verbindungsschafts beschädigt. Ein ähnliches Widerhaken nutzendes Prinzip wird dazu verwendet, um die Halteklammer in einer passenden Bauteilöffnung zu befestigen. Denn ein zusätzlicher Federsteg jedes Federschenkels besitzt an seiner Außenseite einen widerhakenähnlichen Verrastungsvorsprung. Die Außenseite bezeichnet die Seite des Federschenkels, die nicht zwischen den einander gegenüberliegend angeordneten Federschenkeln positioniert ist. Während diese Verrastungsstege den Halt der Halteklammer in einer Bauteilöffnung unterstützen, führen sie gleichzeitig bei einem Auszugsversuch zu einer Beschädigung der Bauteiloberfläche zumindest am Rand der Bauteilöffnung. Diese Beschädigung unterstützt eine Korrosionsanfälligkeit des Bauteils.

DE 297 18 903 U1 offenbart ebenfalls einen Schnellverschluss, der aus einer Halteklammer und einem darin zu verankernden Gewindebolzen besteht. Die Halteklammer besteht aus zwei V-förmig zueinander angeordneten Federschenkeln, die über einen rechteckigen Verbindungssteg miteinander verbunden sind. Der Verbindungssteg weist eine Einsetzöffnung auf, durch welche der Schaft des Gewindebolzens in Richtung eines verjüngten offenen Endes der V-förmigen Anordnung der Federschenkel einsetzbar ist. Die Federschenkel weisen jeweils nach außen vorstehende Rastnasen auf, um die Halteklammer in einer entsprechend angepassten Bauteilöffnung zu verankern. Die nach außen gerichtete Federkraft der Federschenkel bestimmt somit die Haltekräfte, die über die Rastnasen auf den Rand einer Bauteilöffnung übertragen werden können. Dies bringt den Nachteil mit sich, dass Vibrationen oder starke Auszugskräfte auf einen eingeschraubten Gewindebolzen zu einem Lösen der Verbindung zwischen Bauteil und darin verrasteter Halteklammer führen können.

Aus US 5,774,949 A ist zudem ein Clip bekannt, der in eine Öffnung durch einen Rahmen mit elastischen Fingern gedrückt werden kann, die sich nach außen ausdehnen, um zu ermöglichen, dass die Abschnitte der Finger mit einer unteren Kante in Eingriff gelangen, die die Öffnung durch den Rahmen umgibt. Ein Vorsprung, der sich von der Verkleidung erstreckt, wird zwischen die freien Enden der Zinken gedrückt, die sich von gegenüberliegenden Seiten einer Öffnung durch den Kopfabschnitt des Clips erstrecken und wirksam sind, um die Verkleidung an dem Clip und dem Rahmen zu befestigen. Die Finger erstrecken sich von den Armen des Clips, deren freie Enden getrennt bleiben, so dass das untere Ende des Clips auseinander bleibt, um zu verhindern, dass die auf die Verkleidung ausgeübte Kraft auf die Klammer übertragen wird.

Es ist somit die Aufgabe vorliegender Erfindung, im Vergleich zu bekannten Konstruktionen von Halteklammern eines Schnellverschlusses eine Alternative vorzuschlagen, die neben einem verlässlichen Halt eine Beschädigung des Bauteils durch die daran befestigte Halteklammer bei einem möglichen Auszug aus der Bauteilöffnung reduziert oder vollständig verhindert.

### 3. Zusammenfassung vorliegender Erfindung

Die obige Aufgabe wird durch eine Halteklammer eines Schnellverschlusses gemäß dem unabhängigen Patentanspruch 1, durch einen Schnellverschluss mit dieser Halteklammer und einem passenden Verschlussbolzen gemäß Patentanspruch 5 sowie durch eine Bauteilverbindung zwischen zumindest einem ersten Bauteil und einem zweiten Bauteil mit der oben genannten Halteklammer und dem Verschlussbolzen gemäß Anspruch 6 gelöst. Des Weiteren beschreibt Anspruch 7 ein Herstellungsverfahren für die Halteklammer. Weitere vorteilhafte Ausgestaltungen und Weiterentwicklungen vorliegender Erfindung gehen aus der folgenden Beschreibung, den begleitenden Zeichnungen und den anhängenden Ansprüchen hervor.

Die erfindungsgemäße Halteklammer eines Schnellverschlusses ist in einer Bauteilöffnung verrastbar und in der Halteklammer ist ein Verschlussbolzen verriegelbar. Die erfindungsgemäße Halteklammer weist die folgenden Merkmale auf: zwei einander gegenüberliegend V-förmig angeordnete Federschenkel, deren Anordnung ein verjüngtes offenes Ende aufweist, an dem die V-förmig angeordneten Federschenkel nicht miteinander verbunden sind, und deren Anordnung ein aufgeweitetes Ende aufweist, an dem die V-förmig angeordneten Federschenkel über einen Verbindungssteg mit einer zentralen Durchgangsöffnung miteinander verbunden sind, und jeder der zwei V-förmig angeordneten Federschenkel weist ein zentrales Fenster mit einem darin angeordneten Federsteg auf, welcher einseitig befestigt und in seinem Verlauf in Richtung des aufgeweiteten Endes zumindest zweifach abgewinkelt ist.

Die Halteklammer vorliegender Erfindung baut auf einer bekannten Konstruktion in beispielsweise Schnellverschlüssen oder Steckverschlüssen auf. Derartige Halteklammern dienen der Aufnahme und Verriegelung eines Verschlussbolzens oder allgemein eines Verbindungsbolzens, um auf diese Weise zumindest zwei Bauteile miteinander zu verbinden. Dabei zeichnet sich die Halteklammer dadurch aus, dass sie in einer Bauteilöffnung, vorzugsweise eine viereckige oder nicht rotationssymmetrische BauteilÖffnung, einsetzbar ist. Die fehlende Rotationssymmetrie der Bauteilöffnung sorgt dafür, dass die Halteklammer in der Bauteilöffnung drehgesichert gehalten wird. Damit ist es möglich, einen Verschluss- oder Verbindungsbolzen in Form eines Gewindebolzens oder eines Bajonettbolzens oder mit einer ähnlichen eine Drehung erfordernden Verbindungskonstruktion in der Halteklammer zu befestigen.

Während die beiden gegenüber zueinander angeordneten Federschenkel dafür sorgen, dass der Verschlussbolzen oder Verbindungsbolzen in der Halteklammer verlässlich gehalten wird, sorgt die fehlende Verbindung zwischen den beiden Federschenkeln am verjüngten offenen Ende der Halteklammer dafür, dass ein Verschlussbolzen nicht angepasster Länge in die Halteklammer einsetzbar ist. Denn selbst wenn der Verschlussbolzen eine Länge aufweist, die über die Aufnahmelänge der Halteklammer hinaus gehen sollte, ragt das Ende des Verschlussbolzens über die Halteklammer hinaus, ohne auf diese Weise eine Behinderung in der herzustellenden Verbindung zu erzeugen. In der hergestellten Verbindung zwischen den beiden Bauteilen mithilfe des Verschlussbolzens und der Halteklammer treten mechanische Belastungen des Bauteils mit Halteklammer auf, wenn Auszugskräfte des Verschlussbolzens ein Lösen der Verbindung zwischen Verschlussbolzen und Halteklammer bewirken sollen. In diesem Fall ist nicht nur ein verlässliches Halten zwischen Halteklammer und Verschlussbolzen erforderlich. Denn in gleicher Weise ist es von Bedeutung, dass die Halteklammer verlässlich in der Bauteilöffnung des ersten Bauteils gehalten wird. Selbst wenn ein derartiger Halt nicht bei allen mechanischen Belastungen gewährleistet werden kann, darf ein Lösen der Halteklammer aus der Bauteilöffnung nicht zu einer Beschädigung des ersten Bauteils führen.

Um diese Funktion zu gewährleisten, weist der in jeweils einem Fenster der Federschenkel angeordnete Federsteg eine zumindest zweifach abgewinkelte Form auf. Diese winklige Gestalt, greift nicht das im Stand der Technik verwendete Prinzip der widerhakenförmigen Federstege auf, welche sich möglichen Auszugsbewegungen aufgrund einer notwendigen Stauchung entgegensetzen. Vielmehr bringt die gezielte Formgebung des Federstegs, welche eine ins Innere der Halteklammer gerichtete abgewinkelte Form und damit einen nach außen gerichteten Scheitelpunkt verwendet, Stützkräfte gegen ein Lösen der Halteklammer aus der Bauteilöffnung hervor, die nicht mit einem Verkrallen oder Verankern und damit einem Beschädigen in der Bauteiloberfläche des ersten Bauteils arbeiten. Der Federschenkel erzeugt bevorzugt die abstützenden und ein Lösen vermeidenden Kräfte, indem er sich im Bereich seines Scheitelpunktes über eine Außenseite des jeweiligen Federschenkels der Halteklammer hinaus erstreckt. Denn diese Anordnung erfordert ein elastisches Verformen der Federschenkel in Richtung des Inneren der Halteklammer, um diese aus der Bauteilöffnung lösen zu können. Ein derartiger Versuch des Lösens der Halteklammer mit einem darin verankerten Verschlussbolzen bringt bevorzugt aber auch den Effekt mit sich, dass der ins Innere der Halteklammer gedrückte Federsteg nicht ins Innere der Halteklammer ausweichen kann. Denn bei einer derartigen Ausweichbewegung trifft er auf den Schaft des Verschlussbolzens, welcher im Inneren der Halteklammer gehalten ist. Auf diese Weise werden die durch den Federsteg aufgebrachten Halte- bzw. Blockierkräfte bevorzugt verstärkt. Trotz dieser Verstärkung kommt es bei der Wirkung von Auszugskräften für die Halteklammer aus der ersten Bauteilöffnung bevorzugt nicht zu einer Beschädigung der Bauteiloberfläche des ersten Bauteils.

Gemäß einer bevorzugten Ausgestaltung der erfindungsgemäßen Halteklammer liegen die zwei Federstege der V-förmig angeordneten Federschenkel einander gegenüber und weisen jeweils eine konkave Innenseite und eine konvexe Außenseite auf.

In Bezug auf die Konstruktion der Halteklammer ist das Innere der Halteklammer dadurch definiert, dass es durch die beiden einander gegenüberliegend angeordneten Federschenkel begrenzt wird. Somit ist eine Innenseite der Federstege die Seite, die dem gegenüberliegenden Federsteg und Federschenkel zugewandt ist. Entsprechend ist die Außenseite des Federstegs und auch des Federschenkels die Seite, die von dem gegenüberliegenden Federschenkel und Federsteg abgewandt ist. Im Hinblick auf die bevorzugte Formgebung des Federstegs hat sich gezeigt, dass eine zur Außenseite gewölbte Form des Federstegs die gewünschten Halte- und Blockierkräfte unterstützt. Auf diese Weise ergibt sich eine konkave Innenseite und eine konvexe Außenseite des jeweiligen Federstegs. Die konvexe Außenseite, also die entsprechende Wölbung des Federstegs in vom gegenüberliegenden Federschenkel abgewandter Richtung erzeugt einen Scheitelpunkt, der sich über die Außenseite des Federschenkels hinaus erstreckt. Damit ist es erforderlich, beim Einsetzen und beim Lösen der Halteklammer aus der entsprechenden Bauteilöffnung diesen Scheitelpunkt, also diese nach außen gerichtete Wölbung des Federstegs in Richtung des Inneren der Halteklammer zu drücken, um die Halteklammer in die Bauteilöffnung versetzen zu können.

In diesem Zusammenhang ist es bevorzugt, je nach gewünschter Haltekraft die gewölbte Form des jeweiligen Federstegs mit einem bestimmten Krümmungsradius und/oder mit einer bestimmten Erstreckung über die Außenseite des Federschenkels hinaus auszuformen. Denn je weiter sich die Wölbung des Federstegs über die Außenseite des entsprechenden Federschenkels hinaus erstreckt, umso höher fallen die Halte- und somit die Lösekräfte für die Halteklammer aus. Zudem hat sich in unterschiedlichen bevorzugten Ausgestaltungen vorliegender Erfindung gezeigt, dass sich mit kleiner werdendem Krümmungsradius der Wölbung im Federsteg ebenfalls die Halte- und Blockierkräfte für die Halteklammer in der Bauteilöffnung steigern lassen.

Gemäß einer weiteren bevorzugten Ausgestaltung vorliegender Erfindung weist die konvexe Außenseite der Federstege eine glatte Oberfläche auf.

Um bei einem Lösen der Halteklammer aus der Bauteilöffnung und bei einem fortgesetzten verlässlichen Halt der Halteklammer in der Bauteilöffnung trotz wirkender Auszugskräfte eine Beschädigung der Bauteiloberfläche des ersten Bauteils zu vermeiden, hat sich die Vermeidung von scharfen Kanten an der Oberfläche der Federstege als vorteilhaft erwiesen. Denn aufgrund des Fehlens scharfkantiger Ausgestaltungen in der Form der Federstege werden Bereiche der Federstege vermieden, die sich in die Oberfläche des zweiten Bauteils und/oder in die Oberfläche des Verschlussbolzens eingraben. Die auf diese Weise vermiedene Beschädigung der Bauteiloberfläche führt dazu, dass weder die Stabilität des Bauteils reduziert wird noch dass Angriffsstellen für eine mögliche Korrosion des Bauteils erzeugt werden. Denn eine glatt ausgebildete Oberfläche des Federstegs an der bevorzugten Außenseite sorgt für ein beschädigungsfreies Abgleiten des Federstegs am ersten Bauteil, im Speziellen am Rand der Bauteilöffnung des ersten Bauteils.

Erfindungsgemäß weisen die Federstege zumindest einen ersten Scheitelpunkt auf, der sich über eine äußere Oberfläche der Federschenkel hinaus erstreckt. Gemäß der vorliegenden Erfindung sind die Federstege in ihrem Verlauf zumindest zweifach abgewinkelt und ein zweiter Scheitelpunkt des jeweiligen Federstegs erstreckt sich über eine Innenseite des jeweiligen Federschenkels hinaus auf den gegenüberliegenden Federschenkel zu.

Für die Funktionalität der Halteklammer, vorzugsweise für einen verbesserten Halt und eine stabile Position der Halteklammer in der Bauteilöffnung, hat es sich als vorteilhaft erwiesen, im Verlauf der Federstege zwei entgegengesetzt ausgerichtete Scheitelpunkte vorzusehen. Das bedeutet, dass beginnend am offenen Ende der V-förmig angeordneten Federschenkel, also beginnend am festen Ende des Federstegs, zunächst ein erster Scheitelpunkt basierend auf einer Wölbung des Federstegs nach außen und danach ein zweiter Scheitelpunkt mit einer Wölbung des Federstegs nach innen vorgesehen ist. Dabei bewirkt bevorzugt der erste Scheitelpunkt mit seiner Wölbung nach außen Abstützkräfte des Federstegs am Rand der Bauteilöffnung des ersten Bauteils. Der zweite Scheitelpunkt mit einer Wölbung des Federstegs nach innen, also auf den gegenüberliegenden Federschenkel gerichtet, erzeugt bevorzugt Abstützkräfte am Schaft des Verschlussbolzens, der in die Halteklammer eingesetzt ist. Vorzugsweise unterstützen diese abstützenden Kräfte sich gegenseitig, falls ein in die Halteklammer eingesetzter Bolzen Auszugskräfte aus der Halteklammer erfährt. Denn in diesem Fall stützt sich die Wölbung des ersten Scheitelpunkts nach außen am Rand der ersten Bauteilöffnung ab, während gleichzeitig die Abstützung des zweiten Scheitelpunkts am Schaft des Verschlussbolzens ein federndes Ausweichen des Federstegs nach innen verhindert oder zumindest einschränkt oder erschwert.

Gemäß einer weiteren bevorzugten Ausgestaltung der erfindungsgemäßen Halteklammer weist jeder Federschenkel zwei einander gegenüberliegend angeordnete Führungsohren auf, die senkrecht von einer Innenseite der Federschenkel vorstehen.

Vorzugsweise wird das Innere der Halteklammer durch die beiden einander gegenüberliegend angeordneten V-förmig orientierten Federschenkel begrenzt. Seitlich von diesen Federschenkeln ist der Innenraum der Halteklammer offen, so dass ein einzusetzender Schaft des Verschlussbolzens in diese Richtung ausweichen kann. Um eine dadurch erschwerte Herstellung einer Verbindung zwischen Halteklammer und Verschlussbolzen zu vermeiden, begrenzen die erfindungsgemäß bevorzugten Führungsohren ein seitliches Ausweichen des Bolzenschafts beispielsweise während des Einsetzens oder des Lösens des Verschlussbolzens aus der Halteklammer.

Vorliegende Erfindung offenbart zudem einen Schnellverschluss mit einer Halteklammer gemäß einer der oben beschriebenen Ausgestaltungen und einem Verschlussbolzen, wobei der Verschlussbolzen einen Kopf und einen Bolzenschaft aufweist, der aufgrund seiner Schaftkontur in der Halteklammer verrastbar oder befestigbar ist.

Zudem offenbart vorliegende Erfindung eine Bauteilverbindung zwischen zumindest einem ersten Bauteil mit einer viereckigen oder nicht rotationssymmetrischen ersten Bauteilöffnung, in der die Halteklammer gemäß einer der oben beschriebenen bevorzugten Ausgestaltungen befestigt ist, und einem zweiten Bauteil mit einer zweiten Bauteilöffnung, durch die ein Bolzenschaft eines Verschlussbolzens verläuft und in der die Halteklammer verrastet ist, wobei sich ein Kopf des Verschlussbolzens am zweiten Bauteil abstützt.

Vorliegende Erfindung offenbart zudem ein Herstellungsverfahren einer Halteklammer gemäß einer der oben beschriebenen Ausgestaltungen, welches die folgenden Schritte aufweist: Ausstanzen eines ebenen Blechstücks, welches die Formmerkmale der Halteklammer in ebener Form vorgibt, und danach Biegen des ausgestanzten Blechstücks derart, dass die Federschenkel die V-förmige Gestalt und die Federstege einen gekrümmten Verlauf erhalten.

Das Herstellungsverfahren umfasst bevorzugt außerdem den weiteren Schritt: Auftragen einer Korrosionsschutzschicht oder einer anderen Oberflächenbeschichtung auf die Halteklammer. Alternativ dazu ist es ebenfalls bevorzugt, ein Blechstück aus einem korrosionsfesten Stahl, vorzugsweise Edelstahl, dem ersten Verfahrensschritt des Ausstanzens zuzuführen.

### 4. Detaillierte Beschreibung der begleitenden Zeichnungen

Die bevorzugten Ausgestaltungen vorliegender Erfindung werden unter Bezugnahme auf die begleitende Zeichnung näher erläutert. Es zeigen:
- Figur 1: eine seitliche Schnittansicht einer Verbindung von einem ersten Bauteil und einem zweiten Bauteil mithilfe der erfindungsgemäß bevorzugten Halteklammer und einem ebenfalls erfindungsgemäß bevorzugten Verschlussbolzen,
- Figur 2: eine Explosionsdarstellung der Verbindung gemäß Figur 1,
- Figur 3: eine vergrößerte perspektivische Ansicht einer bevorzugten Ausgestaltung der erfindungsgemäßen Halteklammer,
- Figur 4: die Halteklammer gemäß Figur 3 in einer Seitenansicht,
- Figur 5: die Halteklammer gemäß Figur 3 in einer weiteren Seitenansicht,
- Figur 6: ein Schnitt durch die erfindungsgemäß bevorzugte Halteklammer gemäß Figur 5 entlang der dort eingezeichneten Schnittlinie,
- Figur 7: eine teilweise Schnittansicht der Halteklammer eingesetzt in der ersten Bauteilöffnung mit einem darin verankerten Verschlussbolzen,
- Figur 8: eine weitere Darstellung der Anordnung aus Figur 7 unter der Wirkung von Auszugskräften auf den Verschlussbolzen,
- Figur 9: eine weitere Darstellung der Anordnung gemäß Figur 7 unter der Wirkung gesteigerter Auszugskräfte,
- Figur 10: eine weitere Darstellung der Anordnung gemäß Figur 7 bei weiterer Steigerung der Auszugskräfte im Vergleich zur Anordnung in Figur 9,
- Figur 11: eine bevorzugte Ausgestaltung eines Verschlussbolzens,
- Figur 12: eine weitere bevorzugte Ausgestaltung einer Bauteilverbindung mit dem Verschlussbolzen gemäß Figur 11 und der erfindungsgemäß bevorzugten Halteklammer,
- Figur 13: eine Ansicht der Bauteilverbindung gemäß Figur 12 von unten,
- Figur 14: eine weitere bevorzugte Ausgestaltung des Verschlussbolzens,
- Figur 15: eine weitere bevorzugte Ausgestaltung der Bauteilverbindung mit dem bevorzugten Verschlussbolzen gemäß Figur 14,
- Figur 16: eine Ansicht der Bauteilverbindung gemäß Figur 15 von unten,
- Figur 17: eine weitere bevorzugte Ausgestaltung des Verschlussbolzens,
- Figur 18: eine weitere bevorzugte Ausgestaltung einer Bauteilverbindung mit dem Verschlussbolzen gemäß Figur 17,
- Figur 19: eine Ansicht der Bauteilverbindung gemäß Figur 18 von unten und
- Figur 20: ein Flussdiagramm einer bevorzugten Ausführungsform eines Herstellungsverfahrens der Halteklammer.

### 5. Detaillierte Beschreibung der bevorzugten Ausführungsformen

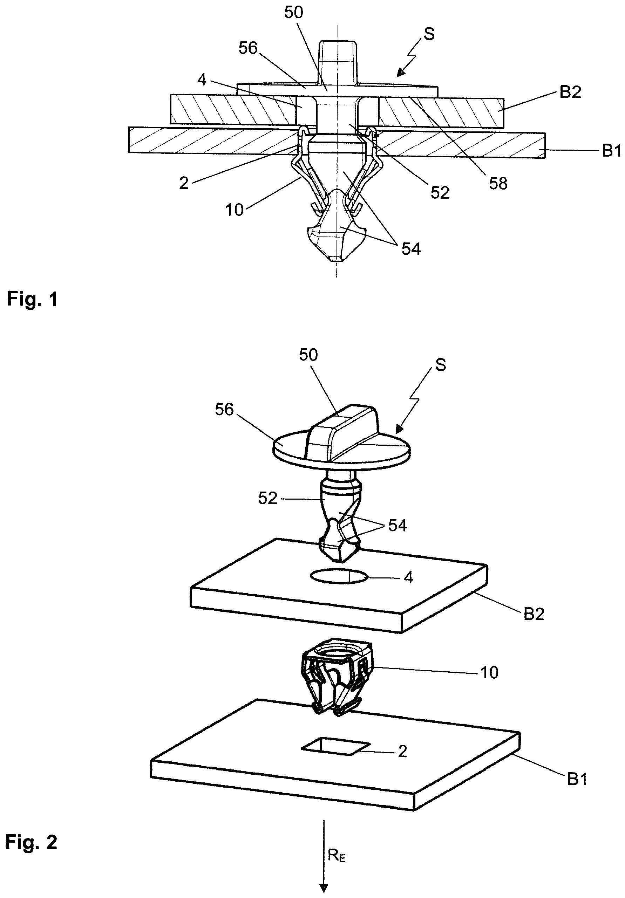

Die Figuren 1 und 2 zeigen eine Bauteilverbindung zwischen einem ersten Bauteil B1 und einem zweiten Bauteil B2. Die mindestens zwei Bauteile B1, B2 sind über einen Schnellverschluss S miteinander verbunden. Der Schnellverschluss S besteht bevorzugt aus einer Halteklammer 10, die in einer ersten Bauteilöffnung 2 im ersten Bauteil B1 angeordnet ist, und einem Verschlussbolzen oder Verbindungsbolzen 50, der eine zweite Bauteilöffnung 4 im zweiten Bauteil B2 durchläuft oder durchgreift. Während die bevorzugte Halteklammer 10 in der ersten Bauteilöffnung 2 gehalten ist, ist ein Schaft 52 des Verschlussbolzens 50 in der Halteklammer 10 befestigt. Zu diesem Zweck weist der Schaft 52 eine bevorzugte Verbindungsgeometrie 54 auf, die zum Verschluss oder zur Verriegelung des Verschlussbolzens 50 dient und gemäß unterschiedlicher bevorzugter Ausgestaltungen unterschiedlich geformt sein kann.

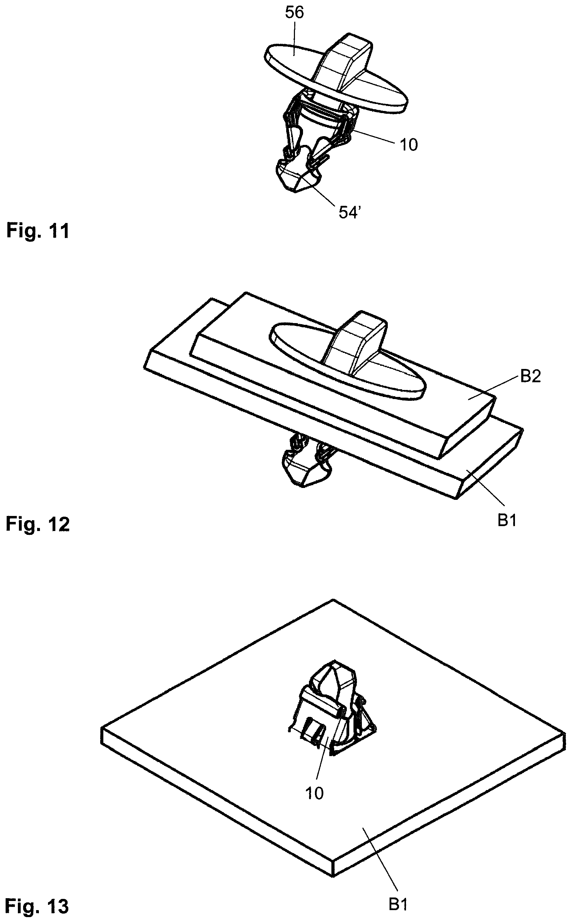

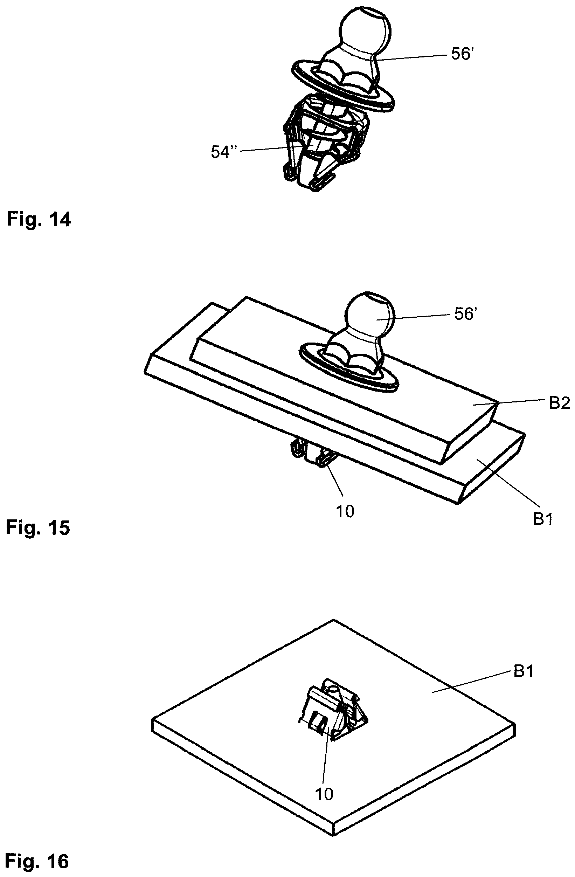

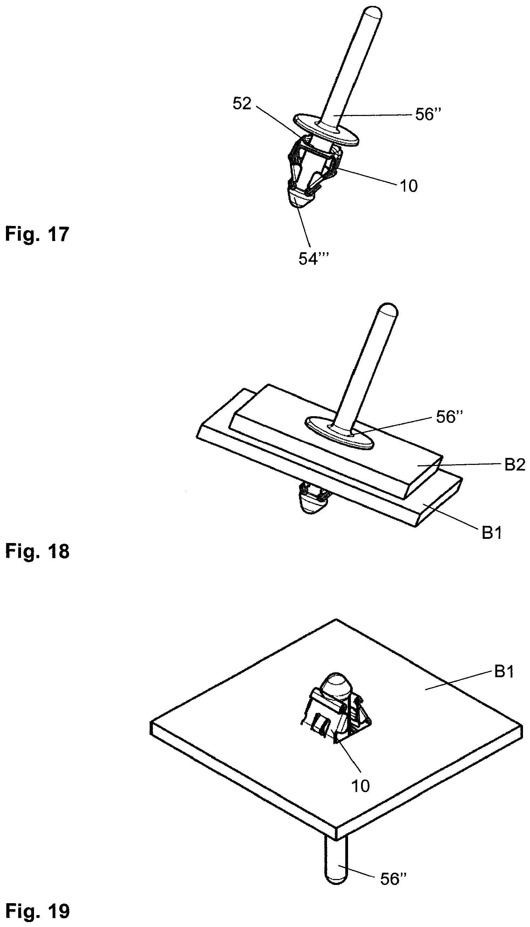

Die Verbindungsgeometrien 54, 54` des Verschlussbolzens 50 in den Figuren 1, 2 und 11 zeigen eine bevorzugte Verschlusskurve oder auch Kurvengeometrie, mit der eine Verbindung zur bevorzugten Halteklammer 10 hergestellt wird. Je nach Gestaltung der Kurvengeometrie 54, 54` lässt sich der Verschlussbolzen 50 links- oder rechtsdrehend mit der Halteklammer 10 verbinden und in entgegengesetzter Drehrichtung wieder lösen. Das gleiche gilt für die bevorzugte gewindeartige Verbindungsgeometrie 54", wie sie in Figur 14 exemplarisch gezeigt ist. Die bevorzugte Verbindungsgeometrie 54" ` gemäß Figur 17 hat eine Verschlusskurve, die ein selbsttätiges Verrasten der Verbindungsgeometrie 54‴ in der Halteklammer 10 und somit des Verschlussbolzens 50 gewährleistet. Dazu wird der Verschlussbolzen 50 in Richtung seiner Längsachse in die Halteklammer 10 gedrückt, bis er sich darin verrastet hat.

Der Verschlussbolzen 50 weist zudem einen Kopf 56 auf, der über den Schaft 52 mit der Verbindunggeometrie 54 verbunden ist. Trotz unterschiedlicher geometrischer Ausgestaltungen weist der Kopf 56 eine Kopfunterseite 58 auf. Die Kopfunterseite 58 stützt sich in der Bauteilverbindung am zweiten Bauteil B2 ab, während der Schaft 52 die zweite Bauteilöffnung 4 durchläuft.

Weitere bevorzugte Ausgestaltungen des Kopfes 56', 56" zeigen die Figuren 14 und 17. Der Kopf 56` in Figur 14 ist ein Kugelkopf mit einem Sechskant als Antriebsmittel. Das Antriebsmittel ist von Vorteil, da die Verbindungsgeometrie 54" als Gewinde ausgebildet ist. Zudem eignet sich der Kugelkopf, um beispielsweise über eine passende Kupplung eine Steckverbindung zu einem Anbauteil oder ähnlichem herzustellen.

In Figur 17 hat der Kopf 56" einen umlaufenden Kragen, der die Kopfunterseite 58 bereitstellt. Gegenüber vom Schaft 52 ist ein bolzenähnlicher Steg vorgesehen, der eine Verbindungsmöglichkeit zu einem anderen Bauteil bereitstellt.

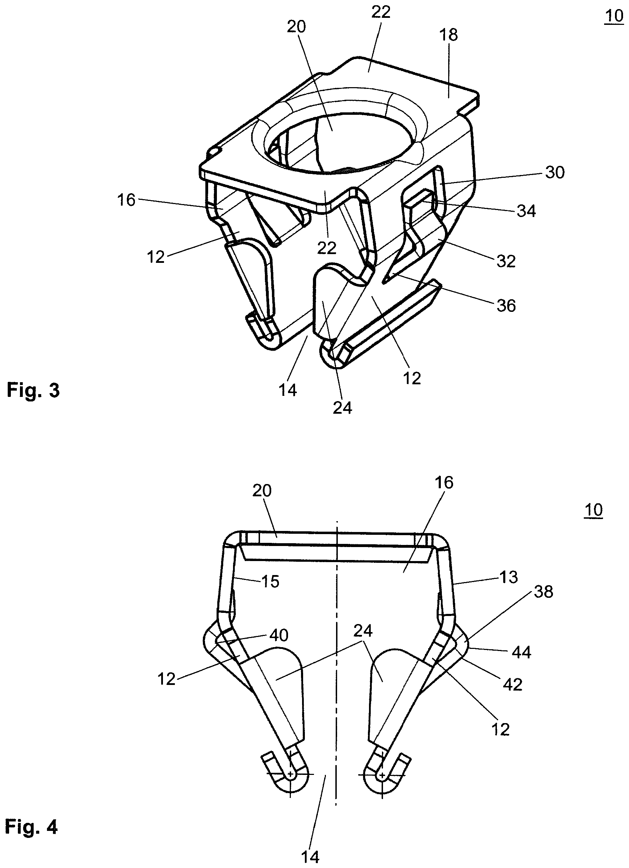

Eine bevorzugte Ausführungsform der Halteklammer 10 ist in den Figuren 3 bis 6 in größerem Detail dargestellt. Gemäß einer bevorzugten Ausgestaltung der Halteklammer 10 wird diese als gestanztes und gebogenes Blechteil hergestellt. Eine weitere bevorzugte Ausführungsform der Halteklammer 10 sieht vor, die Halteklammer 10 aus Kunststoff, wie vorzugsweise ein Thermoplast, spritzzugießen oder mittels 3D-Druck zu produzieren.

Die Halteklammer 10 hat eine V-förmige Grundstruktur, die nicht nur in der Seitenansicht der Halteklammer 10 in Figur 4 erkennbar ist. Die V-förmige Konstruktion wird durch zwei symmetrisch zueinander angeordnete Federschenkel 12 gebildet. Die passende Symmetrieebene zur symmetrischen Anordnung der Federschenkel 12 beschreibt die Strich-Punkt-Linie in Figur 4, die mittig zwischen den gegenüberliegend angeordneten Federschenkeln 12 verläuft.

Die V-förmige Anordnung der Federschenkel 12 hat ein verjüngtes offenes Ende 14. An diesem offenen Ende 14 sind die beiden aufeinander zulaufenden Enden der Federschenkel 12 nicht miteinander verbunden. Stattdessen enden die Federschenkel 12 am verjüngten Ende 14 in einem Abstand zueinander. Das verjüngte offene Ende 14 gewährleistet, dass ein freies Ende des Schaft 52, vorzugsweise die Verbindungsgeometrie 54, das verjüngte offene Ende 14 zumindest teilweise durchlaufen kann, um dort befestigt oder gehalten zu werden. Aufgrund dieser Konstruktion ist der Schaft 52 des Verbindungsbolzens 50 in seiner Länge nicht durch die Halteklammer 10 und deren verjüngtes Ende 14 begrenzt.

Zudem ermöglicht das offene verjüngte Ende 14 eine freie federnde Auslenkung der dort auslaufenden Federschenkel 12. Diese federnde Auslenkung der auslaufenden Federschenkel 12 gewährleistet eine Rastverbindung oder eine Gewindeverbindung oder eine Bajonettverbindung zwischen den Enden der Federschenkel 12 und der Verbindungsgeometrie 54 des Verschlussbolzens 50 (siehe Figuren 1, 11, 13, 14, 17, 19).

Die V-förmige Anordnung der Federschenkel 12 umfasst zudem ein aufgeweitetes Ende 16. Am aufgeweiteten Ende 16 sind die beiden Federschenkel 12 über einen Verbindungssteg 18 miteinander verbunden (siehe Figur 3). Der Verbindungssteg 18 ist vorzugsweise integral mit den beiden Federschenkeln 12 verbunden und legt dadurch den gegenseitigen Abstand der Federschenkel 12 am aufgeweiteten Ende 16 fest.

Vorzugsweise besitzt der Verbindungssteg 18 eine viereckige Form, die durch eine zentrale Durchgangsöffnung 20 durchbrochen ist. Die Durchgangsöffnung 20 ist alternativ rund, elliptisch, oval oder besitzt die Form eines Langlochs. Die Durchgangsöffnung 20 ist bevorzugt auf den aufzunehmenden Schaft 52 des Verschlussbolzens 50 und/oder auf ein möglichst einfaches Einstecken und Verbinden des Verschlussbolzens 50 mit der Halteklammer 10 abgestimmt.

Die bevorzugt integrale Verbindung zwischen dem Verbindungssteg 18 und den seitlich dazu angeordneten Federschenkeln 12 führt zu einem viereckigen Querschnitt der Halteklammer 10, der in der ersten Bauteilöffnung 2 aufzunehmen ist. Der viereckige Querschnitt hat vorzugsweise eine quadratische oder eine rechteckige Form in Abhängigkeit von den Abmessungen der Federschenkel 12 und des Verbindungsstegs 18. Aufgrund des nicht-rotationssymmetrischen Querschnitts der Halteklammer 10 in einer Einsetzrichtung R_{E} wird die Halteklammer 10 bevorzugt in die erste Bauteilöffnung 2 mit einer analogen ebenfalls nicht rotationssymmetrischen Kontur eingesetzt (siehe Figur 2). Die Formgebung des Querschnitts der Halteklammer 10 und der ersten Bauteilöffnung 2 stellen sicher, dass die Halteklammer 10 verdrehsicher in der ersten Bauteilöffnung 2 angeordnet ist.

Ebenfalls bevorzugt umfasst der Verbindungssteg 18 zwei gegenüberliegende seitliche Laschen 22. Die Laschen 22 sind an den Seiten des Verbindungsstegs 18 angeordnet, die nicht durch die Federschenkel 12 besetzt sind.

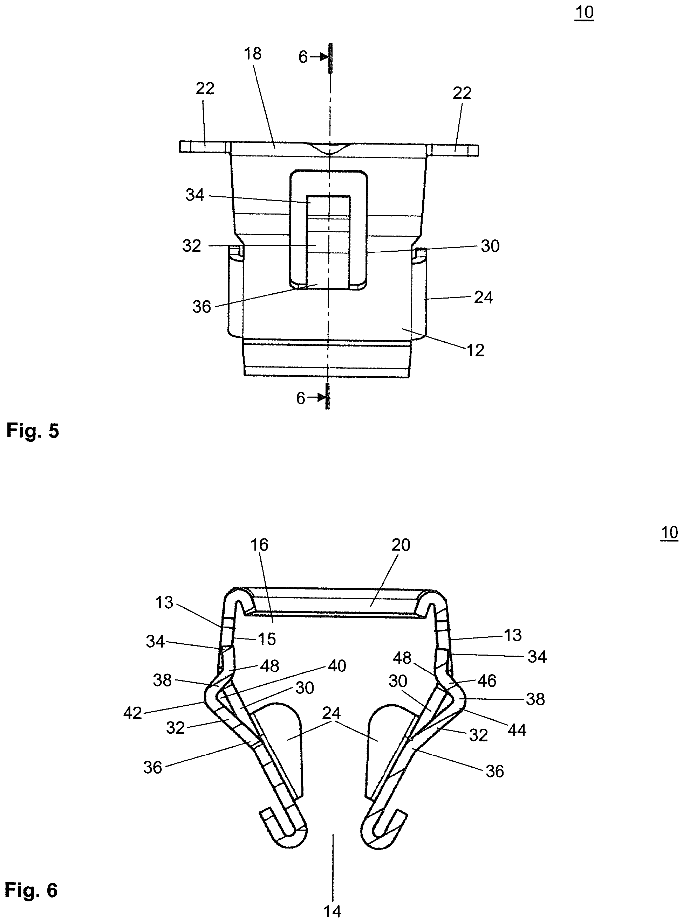

Die vorzugsweise symmetrisch zueinander ausgebildeten und angeordneten Federschenkel 12 umfassen jeweils ein Fenster oder einen Durchbruch 30. Das Fenster 30 hat vorzugsweise eine rechteckige Form, von der sich die längere Seite in Richtung der V-förmigen Federschenkel 12 erstreckt. Ebenfalls bevorzugt ist das Fenster 30 mittig bezogen auf die Breite des Federschenkels 12 angeordnet, wie es in Figur 5 in Bezug auf die mittig ausgerichtete Schnittebene für Figur 6 deutlich wird.

Innerhalb des Fensters 30 ist mittig ein Federsteg 32 angeordnet. Der Federsteg 32 hat ein freies Ende 34, welches dem aufgeweiteten Ende 16 zugewandt ist, sowie ein festes Ende 36, welches integral mit dem Federschenkel 12 verbunden und dem offenen Ende 14 zugewandt ist.

Der Federsteg 32 hat in seinem Verlauf beginnend an seinem festen Ende 36 in Richtung seines freien Endes 34 zumindest eine erste Wölbung 38, die sich über die Außenseite 13 des Federschenkels 12 hinaus erstreckt. Vorzugsweise bildet ein Scheitelpunkt 44 der ersten Wölbung 38 den Punkt, der am weitesten außerhalb der V-förmigen Anordnung der Federschenkel 12 positioniert ist. Dort bildet die erste Wölbung 38 mit dem Scheitelpunkt 44 vorzugsweise eine federnde Verrastungs- und/oder Halteanlage am ersten Bauteil B1, um ein Lösen der Halteklammer 10 aus der ersten Bauteilöffnung 2 zu verhindern.

Die Außenseite 13 des Federschenkels 12 ist durch die Seite des Federschenkels 12 definiert, die vom anderen Federschenkel 12 abgewandt ist. Die erste Wölbung 38 wird durch einen krummlinigen Verlauf des Federstegs 32 gebildet, so dass der Federsteg 32 im Bereich der ersten Wölbung 38 eine konkave Innenseite 40 zugewandt dem anderen Federsteg 32 und eine konvexe Außenseite 42 abgewandt vom anderen Federsteg 32 aufweist.

Erfindungsgemäß weist der Federsteg 32 in seinem Verlauf eine zweite Wölbung 46 auf. Die zweite Wölbung 46 ist zwischen der ersten Wölbung 38 und dem freien Ende 34 des Federstegs 32 angeordnet. Sie ist bevorzugt durch einen krummlinigen Verlauf des Federstegs 32 qualifiziert, der eine konkave zweite Außenseite und eine konvexe zweite Innenseite aufweist. Entsprechend umfasst die konvexe zweite Innenseite einen zweiten Scheitelpunkt 48, der über die Innenseite 15 des Federschenkels 12 hinaus ragt. Daraus folgt, dass die erste Wölbung 38 und die zweite Wölbung 46 gegenläufig zueinander ausgebildet sind, so dass ihr jeweiliger Scheitelpunkt einmal über die Außenseite 13 und einmal über die Innenseite 15 des jeweiligen Federschenkels 12 hinaus ragt.

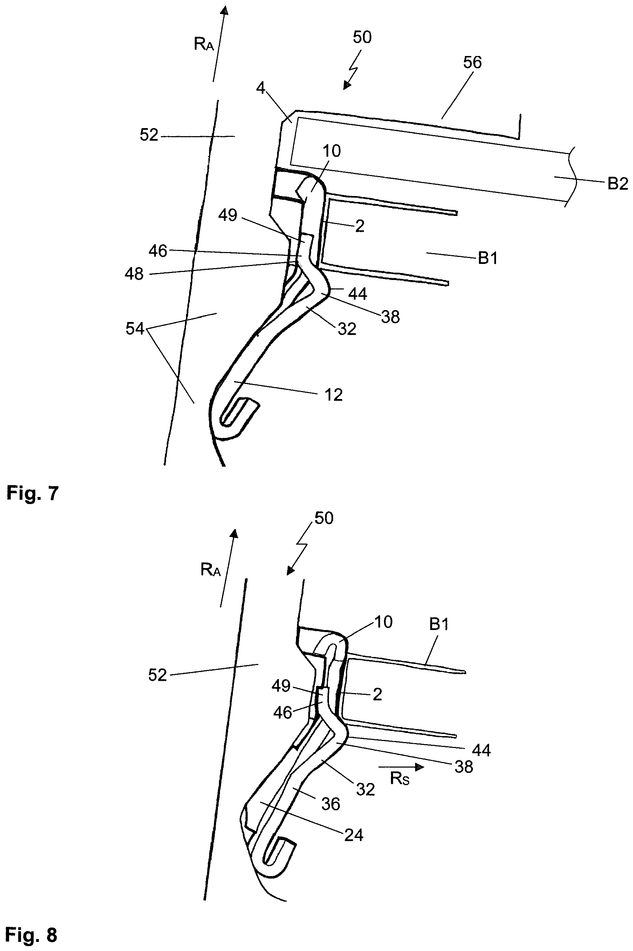

Die zweite Wölbung 46 des Federstegs 32 bildet vorzugsweise mit dem zweiten Scheitelpunkt 48 und dem freien Endbereich 49 des Federstegs 32 einen abstützenden und haltenden Stützsteg, der sich an einem in die Halteklammer 10 eingesetzten Schaft 52 eines Verschlussbolzens 50 abstützt. Dies ist gerade dann der Fall, wenn bei auf den Verschlussbolzen 50 wirkenden Auszugskräften ein Rand der ersten Bauteilöffnung 2 über die erste Wölbung 38 den Federsteg 32 in Richtung des anderen Federstegs 32 einwärts in die Halteklammer 10 drückt. Dies ist unter Bezugnahme auf die Figuren 7 bis 10 unten näher erläutert.

Die Figuren 7 bis 10 veranschaulichen den Schnellverschluss S bestehend aus der bevorzugten Halteklammer 10 und dem Verschlussbolzen 50, der die beiden Bauteile B1, B2 miteinander verbindet. Die Halteklammer 10 ist in der Bauteilöffnung 2 verrastet und der Schaft 52 des Verschlussbolzens 50 durchläuft die zweite Bauteilöffnung 4. Die Verbindungsgeometrie 54 hält den Verschlussbolzen 50 in der Halteklammer 10 und unterstützt gleichzeitig den Halt der Halteklammer 10 in der ersten Bauteilöffnung 2. Zur Veranschaulichung dieser Situation und der Wirkung von Auszugskräften in Richtung R_{A} auf den Verschlussbolzen 50 und auf die Halteklammer 10 sind die Halteklammer 10 und der Verschlussbolzen 50 in den Figuren 7 bis 10 im Teilschnitt dargestellt. Im Hinblick auf die Halteklammer 10 entspricht dieser Teilschnitt im Wesentlichen den in Figur 6 illustrierten Details.

In Figur 7 ist die bevorzugte Bauteilverbindung zwischen dem ersten Bauteil B1 und dem zweiten Bauteil B2 über den Schnellverschluss S gezeigt. Dazu ist die Verbindungsgeometrie 54 vollständig in der Halteklammer 10 verrastet bzw. befestigt. Entsprechend liegen die Federschenkel 12 im Bereich des offenen Endes 14 über weite Bereiche an der Verbindungsgeometrie 54 an. Ein Teil der ersten Wölbung 38 des Federschenkels 32 stützt sich mit seiner Außenseite am Rand der ersten Bauteilöffnung 2 des ersten Bauteils B1 ab. Der freie Endbereich 49 des Federstegs 32 ist entlastet. Vorzugsweise liegt er nicht an der Verbindungsgeometrie 54 an.

In den Figuren 8, 9, 10 ist dargestellt, unter welchen Verformungen der Halteklammer 10 der Verschlussbolzen 50 und die Halteklammer 10 aus der ersten Bauteilöffnung 2 entfernbar sind. In diesem Zusammenhang ist von Bedeutung, dass trotz der auftretenden Verformungen gerade des Federstegs 32 Beschädigungen des ersten Bauteils B1 vermieden werden. Denn die auftretenden Verformungen der Halteklammer 10 führen aufgrund der Konstruktion des Federstegs 32 nicht dazu, dass scharfe Kanten an der Halteklammer 10 vorhanden sind und sich in die Bauteiloberfläche des ersten Bauteils B1 eingraben und Beschädigungen hervorrufen.

Bewegen auftretende Auszugskräfte in Richtung R_{A} den Verschlussbolzen 50 und im Speziellen den Schaft 52 in Richtung R_{A}, dann gleiten die Federschenkel 12 im Bereich des offenen Endes 14 auf der Verbindungsgeometrie 54 kontinuierlich ab. Dadurch werden neben den Federschenkeln 12 auch die Federstege 32 seitlich nach außen in Richtung R_{S} gedrückt. Dies verstärkt bevorzugt den Halt der Halteklammer 10 in der Bauteilöffnung 2. Denn für ein Lösen der Halteklammer 10 aus der ersten Bauteilöffnung 2 muss vorzugsweise der Federsteg 32 gegen zunehmende nach außen wirkende Federkräfte bzw. Haltekräfte durch den Rand der ersten Bauteilöffnung 2 in Richtung des Schaft 52 versetzt werden. Dabei erfährt der Rand der ersten Bauteilöffnung 2 und das erste Bauteil B1 keine Beschädigungen, da der Federsteg 32 mit seiner glatten äußeren Oberfläche am ersten Bauteil B1 anliegt.

Sind die Auszugskräfte in Richtung R_{A} ausreichend groß, versetzt der sich durch die Auszugskräfte bewegende Verschlussbolzen 50 die Halteklammer 10 in Richtung R_{A}. Dabei gleitet die äußere Oberfläche des Federstegs 32 am ersten Bauteil B1 und insbesondere am Rand der ersten Bauteilöffnung 2 weiter ab. Diese Bewegung wird anhand des Vergleichs der Figuren 7 bis 9 deutlich. Man kann erkennen, dass das Abgleiten der Außenseite des Federstegs 32 am ersten Bauteil B 1 den Federsteg 32 einwärts in Richtung des Schafts 52 verformt, bis er mit seinem freien Endbereich 49 dort zunehmend anliegt. Somit sorgt die erste Wölbung 38 des Federstegs 32 durch das Abgleiten des Federstegs 32 am ersten Bauteil B 1 für eine zunehmende federnde Verformung des Federstegs 32 und damit für eine notwendige Zunahme der Auszugskräfte aufgrund steigender Haltekräfte der Halteklammer 10.

Der am Schaft 52 angreifende und/oder anliegende Endbereich 49 wirkt zunächst einer weiteren Verformung des Federstegs 32 in Richtung des Schafts 52 entgegen. Dies ist auf die Form der zweiten Wölbung 46 zurückzuführen.

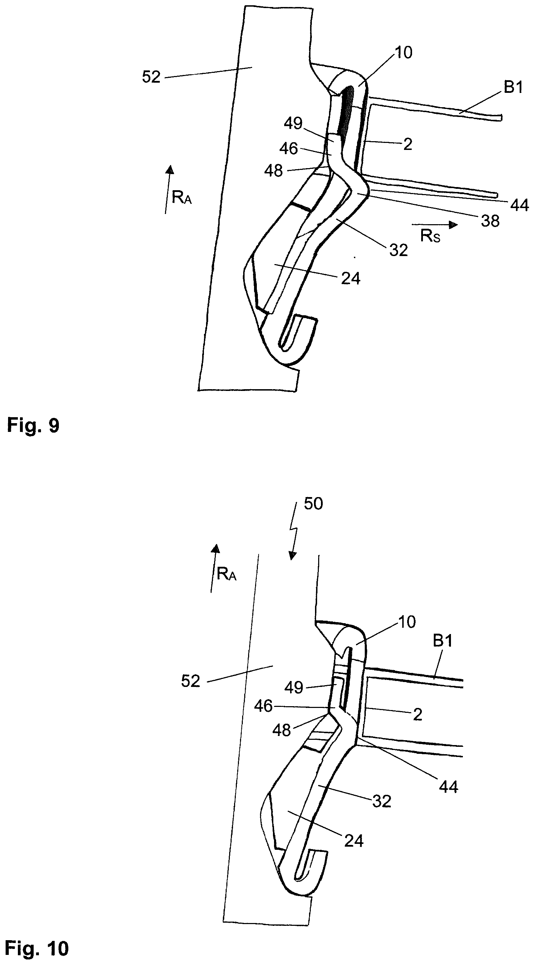

Ausreichend starke Auszugskräfte in Richtung R_{A} verformen den Federsteg 32 weiter (siehe Figur 10). Trotz der Abstützung des Endbereichs 49 am Schaft 52 wird der Federsteg 32 im Bereich seiner ersten Wölbung 38 ohne Bauteilbeschädigung so weit verformt, dass er in die erste Bauteilöffnung 2 gleiten und bewegt werden kann. Damit ist die Halteklammer 10 mit Verschlussbolzen 50 aus der ersten Bauteilöffnung 2 entfernbar.

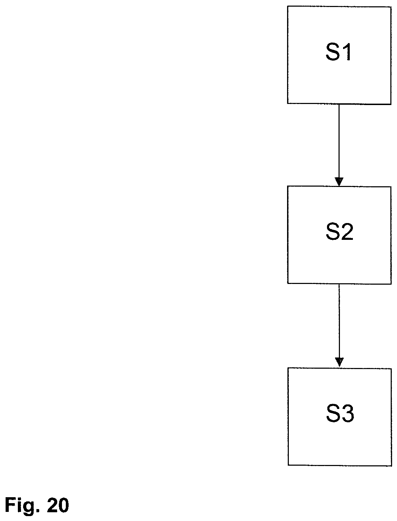

Figur 20 zeigt ein Flussdiagramm eines bevorzugten Herstellungsverfahrens der Halteklammer 10. In einem ersten Schritt S1 wird ein ebenes Blechstück ausgestanzt, welches die Form der späteren Halteklammer 10 vorgibt. In diesem Blechstück sind der Verbindungssteg 18 mit seinen bevorzugten Ausgestaltungen sowie die Federschenkel 12 mit den oben beschriebenen bevorzugten Ausgestaltungen vorgesehen.

In einem darauf folgenden Schritt S2 wird das Blechstück in die gewünschte Form gebogen. Dadurch erhalten die Federschenkel 12 die V-förmige Gestalt und die Federstege 32 werden in ihrem Verlauf gemäß den oben beschriebenen bevorzugten Formmerkmalen ausgestaltet.

In einem dritten Schritt S3 wird vorzugsweise eine Korrosionsschutzschicht oder eine andere Oberflächenbeschichtung auf die Halteklammer 10 aufgebracht. Alternativ dazu ist es bevorzugt, dem Stanzvorgang im Schritt S 1 ein Blech aus korrosionsfestem Stahl, insbesondere Edelstahl, zuzuführen.

### Bezugszeichenliste

- B1, B2: Bauteile
- S: Schnellverschluss
- 2: erste Bauteilöffnung
- 4: zweite Bauteilöffnung
- 10: Halteklammer
- 12: Federschenkel
- 13: Außenseite des Federschenkels
- 14: verjüngtes offenes Ende
- 15: Innenseite des Federschenkels
- 16: aufgeweitetes Ende
- 18: Verbindungssteg
- 20: Durchgangsöffnung
- 22: seitliche Laschen
- 24: seitliche Ohren
- 30: Fenster
- 32: Federsteg
- 34: freies Ende
- 36: festes Ende
- 38: erste Wölbung
- 40: konkave Innenseite
- 42: konvexe Außenseite
- 44: erster Scheitelpunkt
- 46: zweite Wölbung
- 48: zweiter Scheitelpunkt
- 49: freier Endbereich des Federstegs
- 50: Verbindungsbolzen
- 52: Schaft
- 54: Verbindungsgeometrie
- 56: Kopf
- 58: Kopfunterseite

## Patentansprüche

1. Eine Halteklammer (10) eines Schnellverschlusses, die in einer Bauteilöffnung verrastbar und in der ein Verschlussbolzen verriegelbar ist, welche die folgenden Merkmale aufweist:
a. zwei einander gegenüberliegend V-förmig angeordnete Federschenkel (12), deren Anordnung ein verjüngtes offenes Ende (14) aufweist, an dem die V-förmig angeordneten Federschenkel (12) nicht miteinander verbunden sind, und deren Anordnung ein aufgeweitetes Ende (16) aufweist, an dem die V-förmig angeordneten Federschenkel (12) über einen Verbindungssteg (18) mit einer zentralen Durchgangsöffnung (20) miteinander verbunden sind, und
b. jeder der zwei V-förmig angeordneten Federschenkel (12) weist ein Fenster (30) mit einem darin angeordneten Federsteg auf (32), welcher einseitig befestigt und in seinem Verlauf in Richtung des aufgeweiteten Endes (16) zumindest zweifach abgewinkelt ist, wobei
c. sich ein erster Scheitelpunkt (44) über eine äußere Oberfläche (13) der Federschenkel (12) hinaus erstreckt und sich ein zweiter Scheitelpunkt (48) über eine Innenseite (15) des jeweiligen Federschenkels (12) hinaus auf den gegenüberliegenden Federschenkel (12) zu erstreckt.

2. Die Halteklammer (10) nach Anspruch 1, in der die zwei Federstege (32) der V-förmig angeordneten Federschenkel (12) einander gegenüber liegen und jeweils eine konkave Innenseite (40) und eine konvexe Außenseite (42) aufweisen.

3. Die Halteklammer (10) gemäß Anspruch 2, in der die konvexe Außenseite (42) der Federstege (32) eine glatte Oberfläche aufweist.

4. Die Halteklammer (10) gemäß einem der vorhergehenden Ansprüche, in der jeder Federschenkel (12) zwei einander gegenüberliegend angeordnete Führungsohren aufweist, die jeweils senkrecht von einer Innenseite (15) der Federschenkel (12) vorstehen.

5. Ein Schnellverschluss (S) mit einer Halteklammer (10) gemäß einem der vorhergehenden Ansprüche und einem Verschlussbolzen (50), wobei der Verschlussbolzen (50) einen Kopf (56) und einen Bolzenschaft (52) aufweist, der aufgrund einer Schaftkontur in der Halteklammer (10) verrastbar ist.

6. Eine Bauteilverbindung zwischen zumindest einem ersten Bauteil (B1) mit einer viereckigen ersten Bauteilöffnung (2), in der die Halteklammer (10) gemäß einem der vorhergehenden Ansprüche 1 bis 4 befestigt ist, und einem zweiten Bauteil (B2) mit einer zweiten Bauteilöffnung (4), durch die ein Bolzenschaft (52) eines Verschlussbolzens (50) verläuft und in der Halteklammer (10) verrastet ist, wobei sich ein Kopf (56) des Verschlussbolzens (50) am zweiten Bauteil (B2) abstützt.

7. Ein Herstellungsverfahren einer Halteklammer (10) gemäß einem der Ansprüche 1 bis 4, welches die folgenden Schritte aufweist:
S1 Ausstanzen eines ebenen Blechstücks, welches die Formmerkmale der Halteklammer (10) in ebener Form vorgibt, und danach
S2 Biegen des ausgestanzten Blechstücks derart, dass die Federschenkel (12) die V-förmige Gestalt und die Federstege (32) einen gekrümmten Verlauf erhalten.

8. Das Herstellungsverfahren gemäß Anspruch 7, in dem das Blechstück aus einem korrosionsfesten Stahl, vorzugsweise Edelstahl, besteht.

9. Das Herstellungsverfahren gemäß Anspruch 7, mit dem weiteren Schritt:
S3 Auftragen einer Korrosionsschutzschicht oder einer anderen Oberflächenbeschichtung auf die Halteklammer (10).

## Claims

1. A retaining clamp (10) of a quick release fastening device, which is latchable in a component opening and in which a fastening bolt is lockable, comprising the following features:
a. two spring legs (12) arranged opposite to each other in a V-shape, the arrangement of which comprises a tapered open end (14) at which the V-shaped arranged spring legs (12) are not connected to each other, and the arrangement of which comprises a widened end (16) at which the V-shaped arranged spring legs (12) are connected to each other via a connection web (18) with a central passage opening (20), and
b. each of the two spring legs (12) arranged in a V-shape comprises a window (30) with a spring web (32) arranged therein, which is fastened on one side and is angled at least twice in its course in the direction of the widened end (16), wherein
c. at least a first peak (44) extends beyond an outer surface (13) of the spring legs (12) and a second peak (48) extends beyond an inner side (15) of the respective spring leg (12) towards the opposite spring leg (12).

2. The retaining clamp (10) according to claim 1, in which the two spring webs (32) of the spring legs (12) arranged in a V-shape are arranged opposite to each other and each comprises a concave inner side (40) and a convex outer side (42).

3. The retaining clamp (10) according to claim 2, in which the convex outer side (42) of the spring webs (32) comprises a smooth surface.

4. The retaining clamp (10) according to one of the preceding claims, in which each spring leg (12) comprises two guide lugs arranged opposite to each other, each of which projects perpendicularly from an inner side (15) of the spring leg (12).

5. A quick release fastener (S) comprising a retaining clamp (10) according to any of the preceding claims and a fastening bolt (50), wherein the fastening bolt (50) comprises a head (56) and a bolt shaft (52) which is latchable in the retaining clamp (10) due to a shaft contour.

6. A component connection between at least a first component (B1) having a four-square first component opening (2) in which the retaining clamp (10) according to one of the preceding claims 1 to 4 is fastened, and a second component (B2) having a second component opening (4) through which a bolt shaft (52) of a fastening bolt (50) extends and is latched in the retaining clamp (10), wherein a head (56) of the fastening bolt (50) is supported on the second component (B2).

7. A manufacturing method of a retaining clamp (10) according to any of the claims 1 to 4, comprising the following steps:
S1 punching-out a flat sheet metal piece which defines the shape features of the retaining clamp (10) in flat form, and then
S2 bending the punched-out sheet metal piece in such a manner that the spring legs (12) are given the V-like shape and the spring webs (32) have a curved course.

8. The manufacturing method according to claim 7, in which the sheet metal piece is made of a corrosion-resistant steel, preferably stainless steel.

9. The manufacturing method according to claim 7, with the further step:
S3 applying a corrosion protection layer or another surface coating on the retaining clamp (10).

## Revendications

1. Pince de maintien (10) d'une fermeture rapide, laquelle est apte à être encliquetée dans une ouverture de composant et dans laquelle un boulon de fermeture peut être verrouillé, présentant les caractéristiques suivantes :
a. deux branches élastiques agencées en forme de V (12) l'une en face de l'autre, dont l'agencement présente une extrémité ouverte effilée (14) à laquelle les branches élastiques agencées en forme de V (12) ne sont pas reliées entre elles, et dont l'agencement présente une extrémité évasée (16) à laquelle les branches élastiques agencées en forme de V (12) sont reliées entre elles par le biais d'une barre de liaison (18) dotée d'une ouverture de passage centrale (20), et
b. chacune des deux branches élastiques agencées en forme de V (12) présente une fenêtre (30) dotée d'une barre élastique (32) agencée dans celle-ci, laquelle est fixée sur un côté et coudée au moins deux fois sur son tracé évoluant en direction de l'extrémité évasée (16), dans laquelle
c. un premier sommet (44) s'étend au-delà d'une surface extérieure (13) des branches élastiques (12) et un deuxième sommet (48) s'étend au-delà d'un côté intérieur (15) de la branche élastique (12) respective, vers la branche élastique (12) opposée.

2. Pince de maintien (10) selon la revendication 1, dans laquelle les deux barres élastiques (32) des branches élastiques agencées en forme de V (12) sont opposées l'une à l'autre et présentent respectivement un côté intérieur concave (40) et un côté extérieur convexe (42).

3. Pince de maintien (10) selon la revendication 2, dans laquelle le côté extérieur convexe (42) des barres élastiques (32) présente une surface lisse.

4. Pince de maintien (10) selon l'une des revendications précédentes, dans laquelle chaque branche élastique (12) présente deux oreilles de guidage disposées de façon opposée l'une par rapport à l'autre, lesquelles font saillie respectivement perpendiculairement à partir d'un côté intérieur (15) des branches élastiques (12).

5. Fermeture rapide (S) comprenant une pince de maintien (10) selon l'une des revendications précédentes et un boulon de fermeture (50), dans laquelle le boulon de fermeture (50) présente une tête (56) et une tige de boulon (52), laquelle peut être encliquetée dans la pince de maintien (10) grâce à un contour de tige.

6. Raccord de composants entre au moins un premier composant (B1) doté d'une première ouverture de composant carrée (2) dans laquelle la pince de maintien (10) selon l'une des revendications précédentes 1 à 4 est fixée, et un deuxième composant (B2) doté d'une deuxième ouverture de composant (4) à travers laquelle une tige de boulon (52) d'un boulon de fermeture (50) s'étend et s'encliquète dans la pince de maintien (10), dans lequel une tête (56) du boulon de fermeture (50) s'appuie sur le deuxième composant (B2).

7. Procédé de fabrication d'une pince de maintien (10) selon l'une des revendications 1 à 4, présentant les étapes suivantes :
S1 estampage d'une pièce de tôle plate, laquelle définit les caractéristiques de forme de la pince de maintien (10) sous une forme plate, et ensuite
S2 cintrage de la pièce de tôle estampée, de manière à donner la configuration en forme de V aux branches élastiques (12) et un tracé courbe aux barres élastiques (32).

8. Procédé de fabrication selon la revendication 7, dans lequel la pièce de tôle est constituée d'un acier résistant à la corrosion, de préférence d'acier inoxydable.

9. Procédé de fabrication selon la revendication 7, comprenant l'étape supplémentaire suivante :
S3 application d'un revêtement anticorrosion ou d'un autre revêtement de surface sur la pince de maintien (10).
